(19) Europäisches Patentamt
European Patent Office
Office européen des brevets

(11) Veröffentlichungsnummer : **0 024 649**
**B1**

(12) # EUROPÄISCHE PATENTSCHRIFT

(45) Veröffentlichungstag der Patentschrift : **11.08.82**

(21) Anmeldenummer : **80104828.1**

(22) Anmeldetag : **14.08.80**

(51) Int. Cl.³ : **C 07 F 9/12**, C 07 F 9/18, C 07 F 9/24, A 01 N 57/14, A 01 N 57/30

(54) **2,2-Dichlorcyclopropyl-methyl-phosphorsäurederivate, Verfahren zu ihrer Herstellung und ihre Verwendung zur Bekämpfung von Schädlingen.**

(30) Priorität : **24.08.79 DE 2934229**

(43) Veröffentlichungstag der Anmeldung : **11.03.81 (Patentblatt 81/10)**

(45) Bekanntmachung des Hinweises auf die Patenterteilung : **11.08.82 Patentblatt 82/32**

(84) Benannte Vertragsstaaten : **AT BE CH DE FR GB IT LI NL SE**

(56) Entgegenhaltungen :
**DE A 2 234 466**
**DE A 2 634 587**
**US A 2 552 574**
**US A 2 945 054**
**US A 3 277 211**
**US A 3 514 504**

(73) Patentinhaber : **BASF Aktiengesellschaft**
**Carl-Bosch-Strasse 38**
**D-6700 Ludwigshafen (DE)**

(72) Erfinder : **Buerstinghaus, Rainer, Dr.**
**Weinbergstrasse 85**
**D-6940 Weinheim-Luetzelsachsen (DE)**
Erfinder : **Kiehs, Karl, Dr.**
**Sudetenstrasse 22**
**D-6840 Lampertheim (DE)**
Erfinder : **Adolphi, Heinrich, Dr.**
**Kalmitweg 11**
**D-6703 Limburgerhof (DE)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# 2,2-Dichlorcyclopropyl-methyl-phosphorsäurederivate, Verfahren zu ihrer Herstellung und ihre Verwendung zur Bekämpfung von Schädlingen

Die vorliegende Erfindung betrifft 2,2-Dichlorcyclopropyl-methyl-phosphorsäurederivate, Verfahren zu ihrer Herstellung und Schädlingsbekämpfungsmittel, die diese Phosphorsäurederivate als Wirkstoffe enthalten.

S-2,2-Dihalogen-cyclopropyl-methyl-phosphorsäurederivate sind aus der DE-OS 26 34 587 bekannt. Sie eignen sich zur Bekämpfung von Insekten und Nematoden.

Es wurde gefunden, daß 2,2-Dichlorcyclopropyl-methylphosphoräurederivate der Formel I

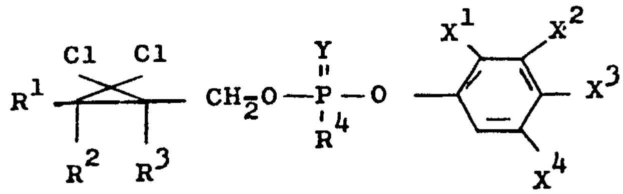

(I),

in der

$R^1$, $R^2$ und $R^3$ gleich oder verschieden sind und Wasserstoff oder Methyl,

$R^4$ eine unverzweigte oder verzweigte Alkoxygruppe mit bis zu 4 Kohlenstoffatomen, einen unverzweigten oder verzweigten Alkylthiorest mit bis zu 4 Kohlenstoffatomen, die Aminogruppe oder einen Alkylamino- oder Dialkylaminorest mit jeweils bis zu 5 Kohlenstoffatomen in einer Alkylgruppe, die unverzweigt oder verzweigt sein kann, und

Y Sauerstoff oder Schwefel bedeuten und

$X^1$, $X^2$, $X^3$ und $X^4$ gleich oder verschieden sind und jeweils für Wasserstoff, Halogen, Nitro, Cyano, Methyl oder Methylthio stehen,

insektizid, akarizid und nematizid sehr gut wirksam und bekannten Wirkstoffen ähnlicher Struktur bzw. gleicher Wirkungsrichtung überlegen sind.

Unverzweigte oder verzweigte Alkoxyreste für $R^4$ sind beispielsweise Methoxy, Äthoxy, Propoxy, Isopropoxy und Butoxyreste ; Alkylthiosubstituenten für $R^4$ können beispielsweise Methylthio, Äthylthio, Propylthio, Isopropylthio, n-Butylthio oder Isobutylthio sein ; als Alkylamino- oder Dialkylaminoreste kommen beispielsweise Methyl- und Dimethylamino, Äthyl und Diäthylamino, Methyläthylamino, Isopropylamino, Di-n-propylamino, n-Butylamino, Di-n-butylamino in Betracht.

Bevorzugte Verbindungen der Formel I sind solche, bei denen $R^1$, $R^2$ und $R^3$ Wasserstoff, $R^4$ Methoxy, Äthoxy, Methylthio, Propylthio, Isobutylthio, Amino, Methylamino, Dimethylamino oder Isopropylamino, insbesondere Methoxy, Y Sauerstoff oder Schwefel und $X^1$, $X^2$, $X^3$ und $X^4$ Wasserstoff, Nitro oder Methylthio bedeuten.

Die 2,2-Dichlorcyclopropyl-methyl-phosphorsäurederivate der Formel I können durch Umsetzung von Phenolen der Formel II gegebenenfalls in Gegenwart eines Säureacceptors oder durch Umsetzung von Alkalimetall-, Erdalkalimetall- oder gegebenenfalls substituierten Ammoniumsalze dieser Phenole mit (Thio)phosphorsäure(di)ester(amid)halogeniden der Formel III nach folgender Reaktionsgleichung erhalten werden :

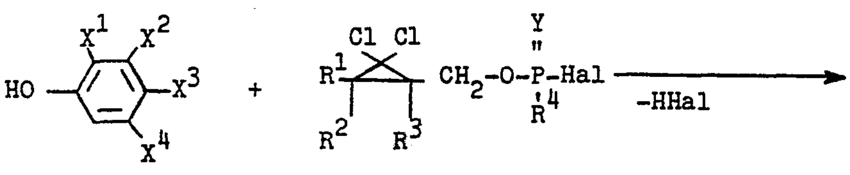


(II) (III)

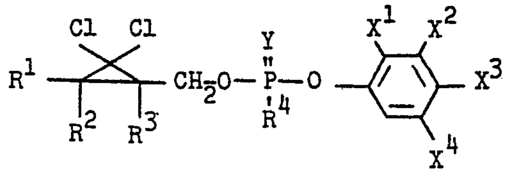

(I)

Dabei haben die Reste $R^1$, $R^2$, $R^3$, $R^4$, $X^1$, $X^2$, $X^3$, $X^4$ und Y die oben angegebenen Bedeutunge, und Hal steht für Halogen, vorzugsweise für Chlor.

Die Umsetzung wird zweckmäßigerweise in inerten Lösungs- oder Verdünnungsmitteln, die gegenüber den Reaktionsteilnehmern inert sind, ausgeführt. Hierfür sind beispielsweise geeignet : aliphatische und aromatische, gegebenenfalls chlorierte Kohlenwasserstoffe, wie Petroläther, Benzol, Toluol, Xylol, Benzin, Dichlormethan, Chloroform, Tetrachlorkohlenstoff, Chlorbenzol, oder Äther, wie Diäthyläther, Di-n-butyläther, Methyl-tert.-butyläther, Tetrahydrofuran, Dioxan, ferner Ketone, wie Aceton, Methyläthylketon, Methylisopropylketon, ferner Nitrile, wie Acetonitril und Propionitril. Auch Gemische dieser Lösungs- oder Verdünnungsmittel können verwendet werden.

Als Säureacceptoren bei der Umsetzung der Phenole der Formel II könen alle üblichen Säurebindemittel Verwendung finden ; als besonders geeignet erweisen sich Erdalkalicarbonate und -alkoholate, wie Natrium- und Kaliumcarbonat, Natrium- und Kaliummethylat bzw. -äthylat, ferner aliphatische, aromatische oder heterocyclische Amine, beispielsweise Triäthylamin, N,N-Dimethyl-äthylamin, Trimethylamin, N,N-Dimethylanilin, Dimethylbenzylamin und Pyridin.

Statt in Gegenwart von Säureacceptoren zu arbeiten, ist es ebenso gut möglich, zunächst Salze der Phenole, beispielsweise Alkalimetallsalze, Erdalkalimetallsalze, das Ammoniumsalz oder substituierte Ammoniumsalze, vorzugsweise die Alkalimetall- oder Ammoniumsalze, der Phenole in Substanz herzustellen und diese anschließend weiter umzusetzen.

Zur Durchführung des Verfahrens setzt man die Ausgangsstoffe meist in äquimolaren Verhältnissen ein. Ein Überschuß der einen oder anderen Reaktionskomponente kann in einigen Fällen Vorteile bringen.

Die Reaktionstemperatur ist innerhalb eines größeren Bereiches variierbar. Im allgemeinen arbeitet man zwischen 0 und 120 °C, vorzugsweise im Bereich zwischen 25 und 60 °C.

Die Umsetzung läßt man im allgemeinen bei Normaldruck ablaufen.

Die zur Herstellung der Verbindungen I als Ausgangsmaterialien verwendeten (Thio)phosphorsäure (di)ester(amid)halogenide der Formel III lassen sich aus den literaturbekannten 2,2-Dichlorcyclopropylcarbinolen der Formel IV (Acta Chim. Scand., Ser B, 31, 463 ff (1977) über die Stufe der 2,2-Dichlorcyclopropyl-methyl-(thio)phosphorsäureester(amid)-dihalogenide der Formel VI nach folgendem Formelschema, in dem die Reste $R^1$, $R^2$, $R^3$, $R^4$, Y und Hal die oben angegebenen Bedeutungen haben, herstellen :

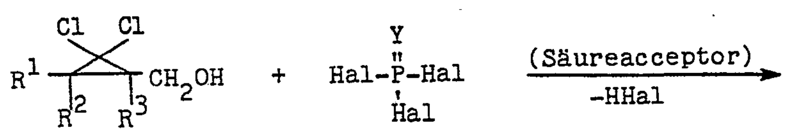


(IV) (V)

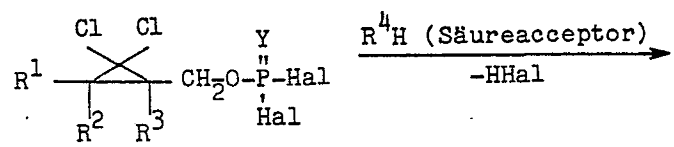


(VI)

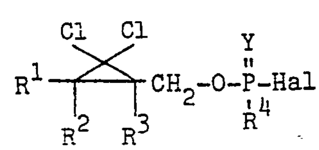

(III)

In einigen Fällen kann es vorteilhaft sein, die vorstehende Reaktionssequenz so zu modifizieren, daß die Umsetzung nach folgendem Formelschema abläuft :

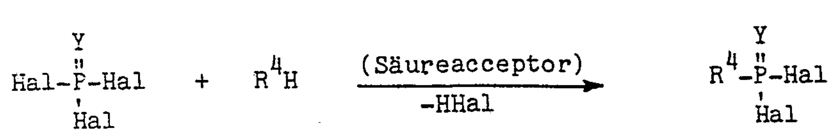


(V) (VII)

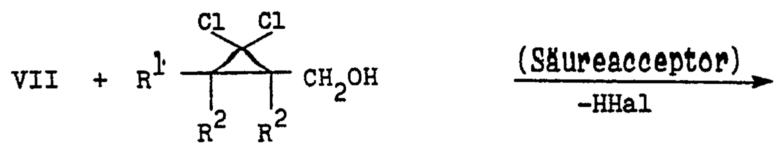


(IV)

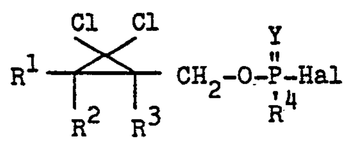

(III)

Die in den vorstehenden Reaktionssequenzen als Zwischenprodukte auftretenden (Thio)Phosphorsäureester(amid)dihalogenide VI und VII können entweder in Substanz isoliert werden oder in einem Eintopfverfahren direkt zu den Verbindungen der Formel III umgesetzt werden.

Zur Herstellung der Verbindungen der Formel III setzt man die in dem vorstehenden Formelschemata aufgeführten Reaktionspartner vorzugsweise im äquimolaren Verhältnis ein.

Für die jeweils erste Reaktionsstufe, d.h. die Umsetzung der Verbindungen der Formel V mit Verbindungen der Formel IV bzw. mit Verbindungen der Formel $R^4H$ kann die Reaktionstemperatur im Bereich zwischen − 70 °C und 0 °C, vorzugsweise − 40 bis − 25 °C, variiert werden. Die zweite Reaktionsstufe wird bei beiden Varianten bei einer Temperatur zwischen − 50 und + 30 °C, vorzugsweise zwischen − 20 und 0 °C, durchgeführt.

Beide Reaktionsstufen werden gegebenenfalls in gegenüber den Reaktionspartnern inerten organischen Solventien, beispielsweise in aliphatischen und aromatischen, gegebenenfalls chlorierten Kohlenwasserstoffen, wie Pentan, Hexan, Petroläther, Toluol, Xylol, Benzin, Methylenchlorid, Chloroform, Tetrachlorkohlenstoff, Chlorbenzol, in Äthern, wie Diäthyläther, Methyl-tert. butyläther, Dibutyläther, Tetrahydrofuran, in Ketonen, wie Aceton, Methyläthylketon, Methylisopropylketon, oder in Nitrilen, wie Acetonitril und Propionitril, durchgeführt.

Als Säureacceptoren eignen sich die zuvor im Zusammenhang mit der Herstellung der Verbindungen der Formel I genannten Säurebindemittel. Als besonders vorteilhaft erweisen sich tertiäre aliphatische Amine, wie Triäthylamin, Trimethylamin, N,N-Dimethyl-N-äthylamin, ferner heterocyclische Amine, wie Pyridin.

Die Verbindungen der Formel III lassen sich auch ohne Zusatz von Säureacceptoren gut herstellen, wenn man die Verbindung $R^4H$ in Form ihrer Alkalimetallsalze direkt mit Verbindungen der Formel V bzw. VI umsetzt.

Die folgenden Beispiele erläutern die Herstellung der 2,2-Dichlorcyclopropyl-methyl-phosphorsäurederivate der Formel I.

Beispiel 1

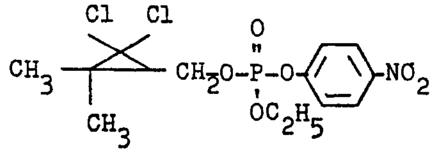

Zu einer auf − 30 °C abgekühlten Lösung von 45,2 g Phosphoroxidchlorid in 180 ml trockenem Diäthyläther läßt man unter Rühren eine Mischung aus 49,9 g 3,3-Dimethyl-2,2-dichlor-1-hydroxymethylcyclopropan, 29,8 g Triäthylamin und 180 ml Diäthyläther tropfen. Das Reaktionsgemisch wird 30 Minuten bei − 10 °C nachgerührt und anschließend bei dieser Temperatur mit einer Lösung von 13,6 g Äthanol und 9,8 g Triäthylamin in 180 ml Äther versetzt. Man läßt binnen 60 Minuten auf Raumtemperatur erwärmen, filtriert vom ausgefallenen Triäthylaminhydrochlorid ab und entfernt das Lösungsmittel bei 10 °C unter vermindertem Druck. Der Rückstand wird in 300 ml Pentan aufgenommen, der unlösliche Anteil (zweite flüssige Phase) abgetrennt und verworfen. Danach wird erneut eingeengt, und die letzten Lösungsmittelreste werden bei Raumtemperatur unter vermindertem Druck entfernt. Man erhält 74,5 g O-Äthyl-O-[(2,2-dichlor-3,3-dimethyl-cyclopropyl)-methyl]-phosphorsäureesterchlorid ; Ausbeute 86 % der Theorie.

$C_8H_{14}Cl_3O_3P$ (296)
Ber. : C 32,5 H 4,8 P 10,5
Gef. : C 32,8 H 5,0 P 10,3
60-MHz-H-NMR-Spektrum in $CDCl_3$ (δ-Werte) :
1,25 (3H), 1,4 (3H), 1,55 (3H), 1,7 (1H), 4,0-4,6 (4H).

4,17 g 4-Nitrophenol werden in 60 ml Acetonitril gelöst und mit 6,25 g fein gepulvertem Kaliumcarbonat versetzt. Anschließend tropft man 9,29 g O-Äthyl-O-[(2,2-dichlor-3,3-dimethyl-cyclopropy)-methyl]-phosphorsäureester-chlorid hinzu, läßt 2 Tage bei Raumtemperatur rühren und entfernt die unlöslichen Bestandteile durch Filtration. Das Filtrat wird am Rotationsverdampfer eingeengt, der Rückstand in 100 ml Diäthyläther aufgenommen und sowohl mit Natriumhydrogencarbonatlösung als auch mit Wasser je zweimal gewaschen. Nach dem Trocknen über Natriumsulfat wird das Lösungsmittel unter vermindertem Druck vollständig abgezogen, wobei 10,3 g O-Äthyl-O-[(2,2-dichlor-3,3-dimethyl-cyclopropyl)-methyl]-O-(4-nitrophenyl)-phosphat in Form eines nahezu farblosen Öls zurückbleiben ; Ausbeute : 87 % der Theorie.

Beispiel 2

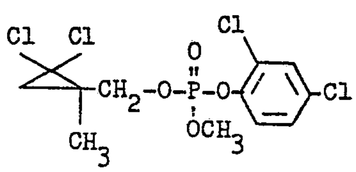

Analog Beispiel 1 wird durch Umsetzung von Phosphoroxidchlorid mit 2,2-Dichlor-1-methyl-1-hydroxymethyl-cyclopropan und Methanol O-Methyl-O-[(2,2-dichlor-1-methyl-cyclopropyl)-methyl]-phosphorsäureesterchlorid hergestellt. 60 MHz-H-NMR-Spektrum in $CDCl_3$ (δ-Werte) : 1,2-1,8 (2H), 1,5 (3H), 3,9 (3H), 4,05-4,5 (2H).

Aus 8,46 g dieses Phosphorsäurediesterchlorids und 4,9 g 2,4-Dichlorphenol und 6,25 g Kaliumcarbonat in 60 ml Acetonitril erhält man nach der im Beispiel 1 beschriebenen Arbeitsweise 10,8 g O-Methyl-O-[(2,2-dichlor-1-methyl-cyclopropyl)-methyl]-O-(2,4-dichlorphenyl)-phosphat in Form eines farblosen Öls ; Ausbeute : 92 % der Theorie.

$C_{12}H_{13}Cl_4O_4P$ (394)
Ber. : C 36,6 H 3,3 P 7,9
Gef. : C 36,9 H 3,2 P 7,7
60-MHz-H-NMR-Spektrum in $CDCl_3$ (δ-Werte) :
1,15-1,55 (2H), 1,4 (3H), 3,8 (3H), 4,0-4,5 (2H), 6,97-7,45 (3H).

Beispiel 3

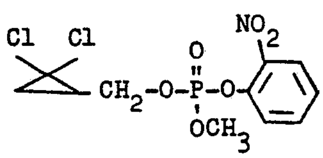

Analog Beispiel 1 erhält man durch Umsetzung von Phosphoroxidchlorid mit 2,2-Dichlor-1-hydroxymethyl-cyclopropan und Methanol O-Methyl-O-[(2,2-dichlor-cyclopropyl)-methyl]-phosphorsäureesterchlorid.

60 MHz-H-NMR-Spektrum in $CDCl_3$ (δ-Werte) :
1,2-2,4 (3H), 3,9 (3H), 3,9-4,5 (2H).

Nach der im Beispiel 1 beschriebenen Arbeitsweise erhält man aus 4,78 g 2-Nitrophenol, 5,6 g Natriumcarbonat und 9,05 g dieses Phosphorsäurediesterchlorids 11,1 g O-Methyl-O-[(2,2-dichlorcyclopropyl)-methyl]-O-(2-nitrophenyl)-phosphat ; Ausbeute : 89 % der Theorie.

$C_{11}H_{12}Cl_2NO_6P$ (356)
Ber. : C 37,1 H 3,4 N 3,9
Gef. : C 37,4 H 3,5 N 4,2
60 MHz-H-NMR-Spektrum in $CDCl_3$ (δ-Werte) :
1,2-2,3 (3H), 3,95 (3H), 4,1-4,6 (2H), 7,1-8,05 (4H).

Beispiel 4

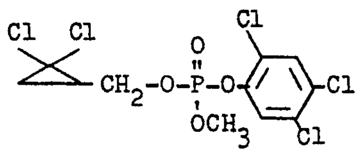

7,3 g gepulvertes Kaliumcarbonat werden unter Rühren in einer Lösung von 6,91 g 2,4,5-Trichlorphenol in 70 ml Aceton suspendiert. Man fügt 9,05 g O-Methyl-O[(2,2-dichlorcyclopropyl)-methyl]-phosphorsäureesterchlorid tropfenweise hinzu, erwärmt die Reaktionsmischung 8 Stunden auf 35 °C und saugt vom gebildeten Kaliumchlorid ab. Nach dem Verdampfen des Lösungsmittels wird der Rückstand in 150 ml Diäthyläther aufgenommen, dreimal mit Sodalösung sowie zweimal mit Wasser gewaschen und über Natriumsulfat getrocknet. Anschließend wird das Lösungsmittel unter vermindertem Druck entfernt, wobei 13,0 g O-Methyl-O-[(2,2-dichlor-cyclopropyl)-methyl]-O-(2,4,5-trichlorphenyl)-phosphat als sirupöse Flüssigkeit zurückbleiben ; Ausbeute : 90 % der Theorie.

$C_{11}H_{10}Cl_5O_4P$ (415)

Ber. : C 31,9 H 2,4 P 7,4

Gef. : C 32,3 H 2,5 P 7,1

60-MHz-H-NMR-Spektrum in $CDCl_3$ (δ-Werte) :

1,25-2,3 (3H), 3,95 (3H), 4,05-4,5 (2H), 7,55 (2H).

Beispiel 5

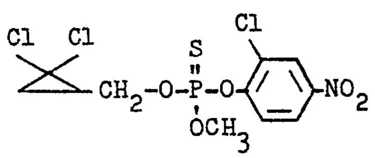

Analog Beispiel 1 erhält man durch Umsetzung von Phosphorsulfidchlorid mit 2,2-Dichlor-1-hydroxymethyl-cyclopropan und Methanol O-Methyl-O-[(2,2-dichlor-cyclopropyl)-methyl]-thiophosphorsäureesterchlorid.

60 MHz-H-NMR-Spektrum in $CDCl_3$ (δ-Werte) :

1,2-2,46 (3H), 3,85 (3H), 3,9-4,4 (2H).

Nach der im Beispiel 4 erläuterten Arbeitsweise erhält man aus 4,83 g 2-Chlor-4-nitrophenol, 5,2 g Kaliumcarbonat und 7,5 g dieses Thiophosphorsäure-O,O-diesterchlorids in einem Lösungsmittelgemisch aus 30 ml Acetonitril und 40 ml Methylenchlorid 10 g O-Methyl-O-[(2,2-dichlorcyclopropyl)-methyl]-O-(2-chlor-4-nitrophenyl)-phosphorthioat als schwach braunes, viskoses Öl ; Ausbeute : 89 % der Theorie.

$C_{11}H_{11}Cl_3NO_5PS$ (407)

Ber. : C 32,5 H 2,7 N 3,4

Gef. : C 32,4 H 2,8 N 3,3

60-MHz-H-NMR-Spektrum in $CDCl_3$ (δ-Werte) :

1,35-2,55 (3H), 4,15 (3H), 4,2-4,8 (2H), 7,7-7,95 (1H), 8,3-8,7 (2H).

Beispiel 6

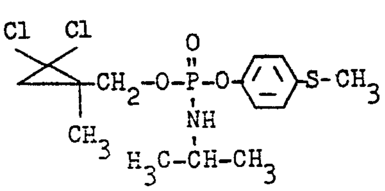

40,05 g Phosphoroxidchlorid werden in 180 ml trockenem Diäthyläther vorgelegt und bei − 25 °C innerhalb von 2 Stunden mit einer Lösung von 46,5 g 1-Methyl-2,2-dichlor-1-hydroxymethyl-cyclopropan und 21,9 g N,N-Dimethyläthylamin in 150 ml Diäthyläther versetzt. Nach beendeter Zugabe wird die Mischung auf − 10 °C erwärmt und eine Stunde bei dieser Temperatur gerührt. Das abgeschiedene Hydrochlorid wird durch Filtration entfernt und das Lösungsmittel bei 20 °C unter vermindertem Druck

verdampft. Das verbleibende Öl wird in 200 ml Pentan aufgenommen und die resultierende Lösung 12 Stunden bei − 15 °C aufbewahrt. Nach erneuter Filtration zieht man das Lösungsmittel vollständig ab (zuletzt bei 0,13 mbar und 25 °C) und erhält 73,0 g O-[(2,2-dichlor-1-methyl-cyclopropyl)-methyl]-phosphorsäureesterdichlorid ; Ausbeute : 89 % der Theorie.

60 MHz-H-NMR-Spektrum in $CDCl_3$ (δ-Werte) :

1,3-1,7 (2H), 1,55 (3H), 4,3 (1H), 4,45 (1H).

30 g dieses Phosphorsäureesterdichlorids werden in 170 ml Diäthyläther gelöst, auf − 20 °C abgekühlt und innerhalb einer Stunde tropfenweise mit einer Lösung von 13 g Isopropylamin in 80 ml Diäthyläther versetzt. Während eines Zeitraumes von 3 Stunden läßt man die Temperatur der Mischung auf 15 °C steigen, saugt vom ausgefallenen Hydrochlorid ab und entfernt das Lösungsmittel bei maximal 30 °C am Rotationsverdampfer. Der Rückstand wird in 120 ml Pentan aufgenommen, über Nach im Kühlschrank stehen gelassen, filtriert und eingeengt. Nach dem vollständigen Abziehen des Pentans bei 25 °C/0,13 mbar erstarrt das erhaltene hellgelbe Öl (29,4 g) zu einer wachsartigen Masse mit einem Schmelzbereich von 34-43 °C. Ausbeute : 90 % der Theorie an O-[(2,2-dichlor-1-methylcyclopropyl)-methyl]-phosphorsäureester-isopropylamidchlorid.

$C_8H_{15}Cl_3NO_2P$ (295)

Ber. : N 4,8

Gef. : N 4,8

270-NHz-H-NMR-Spektrum in $CDCl_3$ (δ-Werte) :

1,25 (6H), 1,4 (1H), 1,5 (3H), 1,6 (1H), 3,5 (1H), 4,1-4,45 (2H), 4,4-4,85 (1H).

In einem trockenen Lösungsmittelgemisch aus 35 ml Toluol und 20 ml Tetrahydrofuran werden 4,66 g Natrium-4-methyl-thio-phenolat suspendiert. Unter heftigem Rühren fügt man tropfenweise 8,5 g O-[(2,2-dichlor-1-methyl-cyclopropyl)-methyl]-phosphorsäureester-isopropylamidchlorid hinzu, läßt anschließend noch 24 Stunden bei Raumtemperatur nachrühren und zieht das Lösungsmittel bei 50 °C unter vermindertem Druck ab. Der Rückstand wird mit 150 ml Diäthyläther verrührt, die erhaltene Mischung filtriert und dreimal mit Wasser gewaschen. Nach dem Trocknen über Natriumsulfat wird am Rotationsverdampfer eingeengt, wobei 10,3 g eines fast farblosen Feststoffs mit einem Schmelzbereich von 32-39 °C zurückbleiben. Ausbeute : 90 % der Theorie an O-(4-methylthiophenyl)-phosphorsäureester-isopropylamid.

$C_{15}H_{22}Cl_2NO_3PS$ (398)

Ber. : C 45,3 H 5,6 N 3,5

Gef. : C 45,9 H 5,7 N 3,6

100-MHz-H-NMR-Spektrum in $CDCl_3$ (δ-Werte) :

1,1-1,25 (6H), 1,3-1,55 (5H), 2,4 (3H), 3,0-3,7 (2H), 3,9-4,4 (2H), 7,15 (4H).

Die folgenden Verbindungen der Formel I können beispielsweise analog hergestellt werden :

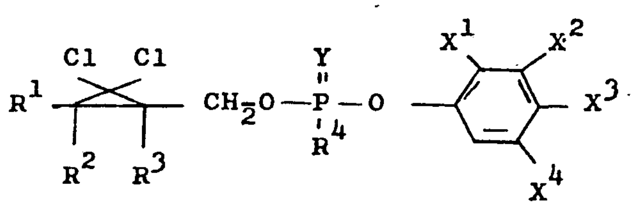

(I)

(Siehe die Tabelle, Seiten 8, 9, 10, 11)

| Nr. | $R^1$ | $R^2$ | $R^3$ | $R^4$ | Y | $X^1$ | $X^2$ | $X^3$ | $X^4$ | H-NMR-Daten (MHz, Lösungsmittel, $\delta$-Werte) |
|---|---|---|---|---|---|---|---|---|---|---|
| 7 | $CH_3$ | $CH_3$ | H | $OCH_3$ | O | H | H | $NO_2$ | H | (60, $CDCl_3$) 1,3 (3H), 1,4 (3H), 1,65 (1H), 3,9 (3H), 4,3 (2H), 7,35 (2H), 8,2 (2H) |
| 8 | $CH_3$ | $CH_3$ | H | $OC_2H_5$ | O | Cl | H | Cl | H | (60, $CDCl_3$) 1,25 (3H), 1,35 (6H), 1,65 (1H), 4,0-4,6 (4H), 7,05-7,6 )3H) |
| 9 | $CH_3$ | $CH_3$ | H | $OCH_3$ | O | Cl | H | Cl | Cl | (60, $CDCl_3$) 1,25 (3H), 1,35 (3H) 1,65 (1H), 3,9 (3H), 4,0-4,6 (2H) 7,50 (1H), 7,55 (1H) |
| 10 | H | H | $CH_3$ | $OCH_3$ | O | H | H | $NO_2$ | H | (60, $CDCl_3$) 1,25-1,6 (5H), 3,95 (3H), 4,15-4,4 (2H), 7,3 (2H), 8,15 (2H) |
| 11 | $CH_3$ | $CH_3$ | H | $OC_2H_5$ | O | Cl | H | Cl | Cl | (60, $CDCl_3$) 1,25 (3H), 1,4 (6H), 1,65 (1H), 4,0-4,6 (4H), 7,5 (1H) 7,6 (1H) |
| 12 | $CH_3$ | $CH_3$ | H | $OCH_3$ | O | Cl | H | Cl | H | (90, $CDCl_3$) 1,25 (3H), 1,35 (3H), 1,65 (1H), 3,9 (3H), 4,15-4,6 (2H), 7,2-7,55 (3H) |
| 13 | $CH_3$ | $CH_3$ | H | $OC_2H_5$ | O | $NO_2$ | H | H | H | (90, $CDCl_3$) 1,25 (3H), 1,35 (6H), 1,65 (1H), 4,2-4,65 (4H), 7,35 (1H), 7,65 (1H), 7,95 (1H) |
| 14 | $CH_3$ | $CH_3$ | H | $OCH_3$ | O | $NO_2$ | H | H | H | (60, $CDCl_3$) 1,2 (3H), 1,3 (3H), 1,6 (1H), 3,8 (3H), 4,2 (2H), 7,0-7,55 (3H), 7,8 (1H) |
| 15 | H | H | $CH_3$ | $OCH_3$ | O | $NO_2$ | H | H | H | (90, $CDCl_3$) 1,25-1,7 (5H), 3,95 (3H), 4,15-4,6 (2H), 7,35 (1H), 7,65 (1H), 8,0 (1H) |
| 16 | H | H | $CH_3$ | $OCH_3$ | O | Cl | H | Cl | Cl | (90, $CDCl_3$) 1,25-1,7 (5H), 3,95 (3H), (4,2-4,6 (2H), 7,55 (1H), 7,6 (1H) |

| Nr. | $R^1$ | $R^2$ | $R^3$ | $R^4$ | Y | $X^1$ | $X^2$ | $X^3$ | $X^4$ | H-NMR-Daten (MHz, Lösungsmittel, δ-Werte) |
|---|---|---|---|---|---|---|---|---|---|---|
| 17 | $CH_3$ | $CH_3$ | H | $OCH_3$ | O | H | H | $SCH_3$ | H | (60, $CDCl_3$) 1,2 (3H), 1,3 (3H), 1,45-1,85 (1H), 2,4 (3H), 3,85 (3H), 4,3 (2H), 7,2 (4H) |
| 18 | $CH_3$ | $CH_3$ | H | $OC_2H_5$ | O | H | H | $SCH_3$ | H | (60, $CDCl_3$) 1,2 (3H), 1,3 (6H), 1,65 (1H), 2,4 (3H), 4,0-4,5 (4H), 7,2 (4H) |
| 19 | $CH_3$ | $CH_3$ | H | $OC_2H_5$ | O | H | $CH_3$ | $SCH_3$ | H | (60, $CDCl_3$) 1,2 (3H), 1,3 (6H), 1,65 (1H), 2,3 (3H), 2,35 (3H), 4,0-4,6 (4H), 7,1 (1H) |
| 20 | $CH_3$ | $CH_3$ | H | $OCH_3$ | O | H | $CH_3$ | $SCH_3$ | H | (60, $CDCl_3$) 1,2 (3H), 1,3 (3H), 1,6 (1H), 3,35 (3H), 3,4 (3H), 3,9 (3H), 4,3 (2H), 7,1 (3H) |
| 21 | H | H | $CH_3$ | $OCH_3$ | O | H | H | $SCH_3$ | H | (60, $CDCl_3$) 1,2-1,65 (5H), 2,45 (3H), 3,9 (3H), 4,15-4,4 (2H), 7,2 (4H) |
| 22 | H | H | $CH_3$ | $OCH_3$ | O | H | $CH_3$ | $SCH_3$ | H | (60, $CDCl_3$) 1,2-1,65 (5H), 2,3 (3H), 2,4 (3H), 3,9 (3H), 4,1-4,4 (2H), 7,1 (3H) |
| 23 | H | H | H | $OCH_3$ | O | H | H | CN | H | (60, $CDCl_3$) 1,2-2,3 (3H), 3,9 (3H), 4,05-4,65 (2H), 7,35 (2H), 7,8 (2H) |
| 24 | H | H | H | $OCH_3$ | O | H | H | $SCH_3$ | H | (60, $CDCl_3$) 1,15-2,2 (3H), 2,4 (3H), 3,8 (3H), 4,0-4,5 (2H), 7,15 (4H) |
| 25 | H | H | H | $OCH_3$ | O | H | $CH_3$ | $SCH_3$ | H | (60, $CDCl_3$) 1,15-2,2 (3H), 2,3 (3H), 2,4 (3H), 3,8 (3H), 4,0-4,5 (2H), 7,05 (3H) |
| 26 | H | H | H | $OCH_3$ | O | Cl | H | Cl | H | (60, $CDCl_3$), 1,2-2,5 (3H), 3,9 (3H), 4,1-4,6 (2H), 7,1-7,6 (3H) |
| 27 | H | H | H | $OCH_3$ | O | H | H | $NO_2$ | H | (60, $CDCl_3$) 1,2-2,5 (3H), 3,9 (3H), 4,15-4,65 (2H), 7,4 (2H), 8,2 (2H) |

| Nr. | $R^1$ | $R^2$ | $R^3$ | $R^4$ | Y | $X^1$ | $X^2$ | $X^3$ | $X^4$ | H-NMR-Daten (MHz, Lösungsmittel, $\delta$-Werte) |
|---|---|---|---|---|---|---|---|---|---|---|
| 28 | H | $CH_3$ | H | $OCH_3$ | O | Cl | H | Cl | Cl | (60, $CDCl_3$) 1,15-1,9 (5H), 3,95 (3H), 4,2-4,6 (2H), 7,7 (1H), 7,8 (1H) |
| 29 | H | $CH_3$ | H | $OCH_3$ | O | Cl | H | Cl | H | (60, $CDCl_3$) 1,1-1,95 (5H), 3,95 (3H), 4,2-4,6 (2H), 7,25-7,6 (3H) |
| 30 | H | $CH_3$ | H | $OCH_3$ | O | H | H | $SCH_3$ | H | (60, $CDCl_3$) 1,1-1,9 (5H), 2,45 (3H), 3,9 (3H), 4,15-4,6 (2H), 7,25 (4H) |
| 31 | H | $CH_3$ | H | $OCH_3$ | O | H | H | $NO_2$ | H | (60, $CDCl_3$) 1,1-2,0 (5H), 3,95 (3H), 4,15-4,65 (2H), 7,5 (2H), 8,35 (2H) |
| 32 | H | H | $CH_3$ | $OCH_3$ | O | Cl | H | $NO_2$ | H | (60, $CDCl_3$) 1,3-1,7 (5H), 4,0 (3H), 4,25-4,55 (2H), 7,7 (1H), 8,05-8,4 (2H) |
| 33 | H | H | $CH_3$ | $OCH_3$ | O | H | $CH_3$ | $NO_2$ | H | (60, $CDCl_3$) 1,3-1,7 (5H), 2,6 (3H), 3,9 (3H), 4,2-4,5 (2H), 7,1-7,4 (2H), 8,05 (1H) |
| 34 | H | H | $CH_3$ | $OCH_3$ | O | Cl | H | Br | H | (60, $CDCl_3$) 1,25-1,7 (5H), 3,95 (3H), 4,2-4,5 (2H), 7,4 (2H), 7,6 (1H) |
| 35 | H | H | $CH_3$ | $N(CH_3)_2$ | O | H | H | $NO_2$ | H | (60, $CDCl_3$) 1,3-1,65 (5H), 2,8 (3H), 3,0 (3H), 4,15-4,55 (2H), 7,6 (2H), 8,5 (2H) |
| 36 | H | H | $CH_3$ | $N(CH_3)_2$ | O | H | H | $SCH_3$ | H | (60, $CDCl_3$) 1,2-1,7 (5H), 2,5 (3H), 2,7 (3H), 2,9 (3H), 4,1-4,4 (2H), 7,4 (4H) |
| 37 | H | H | $CH_3$ | $N(CH_3)_2$ | O | Cl | H | Cl | H | (60, $CDCl_3$) 1,3-1,75 (5H), 2,75 (3H), 2,95 (3H), 4,2-4,5 (2H), 7,3-7,8 (3H) |
| 38 | H | H | $CH_3$ | $NHCH(CH_3)_2$ | O | $NO_2$ | H | H | H | (100, $CDCl_3$) 1,1-1,3 (6H), 1,3-1,6 (5H), 3,3-3,7 (2H), 4,0-4,45 (2H), 7,05-8,0 (4H) |
| 39 | H | H | $CH_3$ | $NHCH(CH_3)_2$ | O | H | H | $NO_2$ | H | (100, $CDCl_3$) 1,0-1,35 (6H), 1,35-1,6 (5H), 3,25-3,65 (2H), 395-4,4 (2H), 7,4 (2H), 8,2 (2H) |

| Nr. | $R^1$ | $R^2$ | $R^3$ | $R^4$ | Y | $X^1$ | $X^2$ | $X^3$ | $X^4$ | H-NMR-Daten (MHz, Lösungsmittel, δ-Werte) |
|---|---|---|---|---|---|---|---|---|---|---|
| 40 | H | H | H | $OCH_3$ | S | H | H | $NO_2$ | H | (60, $CDCl_3$) 1,25-2,5 (3H), 4,05 (3H), 4,2-4,85 (2H), 7,6 (2H), 8,5 (2H) |
| 41 | H | H | H | $OCH_3$ | S | Cl | H | Br | H | (60, $CDCl_3$) 1,25-2,45 (3H), 4,05 (1H), 4,3-4,8 (2H), 7,55 (2H), 7,85 (1H) |
| 42 | H | H | H | $OCH_3$ | S | Cl | H | Cl | H | (60, $CDCl_3$) 1,25-2,55 (3H), 4,0 (3H), 4,3-4,85 (2H), 7,5 (2H), 7,6 (1H) |
| 43 | H | H | H | $OCH_3$ | S | H | H | $SCH_3$ | H | (60, $CDCl_3$) 1,25-2,5 (3H), 2,4 (3H), 4,05 (3H), 4,25-4,8 (2H), 7,2 (4H) |
| 44 | H | H | H | $OCH_3$ | S | H | $CH_3$ | $NO_2$ | H | (60, $CDCl_3$) 1,25-2,5 (3H), 2,7 (3H), 4,0 (3H), 4,2-4,8 (2H), 7,4 (2H), 8,3 (1H) |
| 45 | H | H | H | $OCH_3$ | S | $NO_2$ | H | H | H | (60, $CDCl_3$) 1,3-2,5 (3H), 4,05 (3H), 4,3-4,9 (2H), 7,4-7,95 (3H), 8,2 (1H) |
| 46 | $CH_3$ | $CH_3$ | H | $OCH_3$ | S | Cl | H | Cl | H | (60, $CDCl_3$) 1,25 (3H), 1,35 (3H), 1,7 (1H), 3,9 (3H), 4,35 (2H), 7,25 (2H), 7,4 (1H) |
| 47 | $CH_3$ | $CH_3$ | H | $OCH_3$ | S | H | H | $SCH_3$ | H | (60, $CDCl_3$) 1,3 (3H), 1,4 (3H), 1,7 (1H), 2,45 (3H), 3,9 (3H), 4,3 (2H), 7,2 (4H) |
| 48 | $CH_3$ | $CH_3$ | H | $OCH_3$ | S | H | H | $NO_2$ | H | (60, $CDCl_3$) 1,3 (3H), 1,4 (3H), 1,7 (1H), 3,9 (3H), 4,15-4,55 (2H), 7,4 (2H), 8,25 (2H) |
| 49 | $CH_3$ | $CH_3$ | H | $OCH_3$ | O | H | H | F | H | (60, $CDCl_3$) 1,25 (3H), 1,4 (3H), 1,7 (1H), 3,95 (3H), 4,4 (2H), 7,0-7,65 (4H) |
| 50 | $CH_3$ | $CH_3$ | H | S-i-$C_4H_9$ | O | Cl | H | Br | H | (60, $CDCl_3$) 1,0 (3H), 1,1 (3H), 1,3 (3H), 1,45 (3H), 1,5-2,5 (2H), 2,6-3,3 (2H), 4,2-4,85 (2H), 7,35-7,9 (3H) |
| 51 | $CH_3$ | $CH_3$ | H | $NH_2$ | O | Cl | H | Cl | H | (60, $CDCl_3$) 1,25 (3H), 1,4 (3H), 1,65 (1H), 3,3 (2H), 4,25 (2H), 7,45 (2H), 7,6 (1H) |

Nach der im Beispiel 6 beschriebenen Verfahrensweise können folgende Verbindungen der Formel VI hergestellt werden :

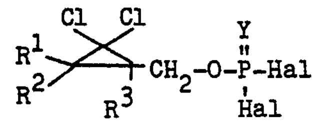

| $R^1$ | $R^2$ | $R^3$ | Y | Hal | H-NMR-Daten (MHz, Lösungsmittel, δ-Werte) |
|---|---|---|---|---|---|
| $CH_3$ | $CH_3$ | H | S | Cl | (60, $CDCl_3$) 1,35 (3H), 1,5 (3H), 1,75 (1H), 4,1-4,8 (2H) |
| H | H | H | S | Cl | (60, $CDCl_3$) 1,3-2,6 (3H), 4,45-4,9 (2H) |
| $CH_3$ | $CH_3$ | H | O | Cl | (80, $CDCl_3$) 1,3 (3H), 1,45 (3H); 4,2-4,7 (2H) |
| H | H | $CH_3$ | S | Cl | (60, $CDCl_3$) 1,3-1,7 (5H), 4,45 (1H); 4,65 (1H) |

Nach der in den Beispielen 1 und 6 beschriebenen Verfahrensweise können folgende Verbindungen der Formel III hergestellt werden :

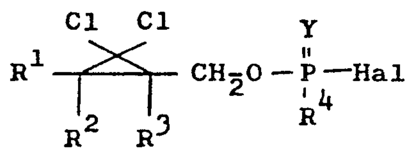

(III)

| $R^1$ | $R^2$ | $R^3$ | $R^4$ | Y | Hal | H-NMR-Daten (MHz, Lösungsmittel, δ-Werte) |
|---|---|---|---|---|---|---|
| $CH_3$ | $CH_3$ | H | $OCH_3$ | O | Cl | (60, $CDCl_3$) 1,3 (3H), 1,45 (3H), 1,7 (1H), 3,9 (3H), 4,2-4,6 (2H) |
| H | H | $CH_3$ | $N(CH_3)_2$ | O | Cl | (60, $CDCl_3$) 1,3-1,65 (2H), 1,5 (3H), 2,65 (3H), 2,95 (3H), 4,15-4,7 (2H) |
| $CH_3$ | $CH_3$ | H | $OCH_3$ | S | Cl | (60, $CDCl_3$) 1,3 (3H), 1,4 (3H), 1,65 (1H), 3,85 (3H), 4,0-4,5 (2H) |
| $CH_3$ | H | H | $OCH_3$ | O | Cl | (60, $CDCl_3$) 1,2-1,8 (2H), 1,35 (3H); 3,9 (3H), 4,0-4,5 (2H) |
| $CH_3$ | $CH_3$ | H | $S\text{-}n\text{-}C_3H_7$ | O | Cl | (60, $CDCl_3$) 1,1 (3H), 1,35 (3H) 1,45 (3H); 1,5-2,2 (3H), 2,6-3,4 (2H), 4,2-4,85 (2H) |

Die erfindungsgemäßen 2,2-Dichlorcyclopropyl-methyl-phosphorsäurederivate der Formel I sind geeignet, Schädlinge aus der Klasse der Insekten, Milben, Zecken und Nematoden wirksam zu bekämpfen. Sie können im Pflanzenschutz sowie auf dem Hygiene-, Vorratsschutz- und Veterinärsektor eingesetzt werden.

Zu diesen Schädlingen gehören Insekten aus der Ordnung der Schmetterlinge (Lepidoptera), beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis

(Rübenzünsler), Ephestia kuehniella (Mehlmotte), Chilo suppressalis (Reisstengelbohrer), Galleria Mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarus (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling), Aporia crataegi (Baumweißling) ;

aus der Ordnung der Käfer (Coleoptera), beispielsweise Blitophaga undata (Schwarzer Rübenaaskäfer), Melanotus communis (Drahtwurm), Limonius californicus (Drahtwurm), Agriotes lineatus (Saatschnellkäfer), Agriotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varivestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner) ;

aus der Ordnung der Zweiflügler (Diptera), beispielsweise Lycoria pectoralis, Mayetiola destructor (Hessenfliege), Dasineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ocis, Chrysomya macellaria, Chrysomya hominivorax, Lucilia cuprina, Lucilia sericata, Hypoderma lineata ;

aus der Ordnung der Hautflügler (Hymenoptera), beispielsweise Athalia rosae (Rübenblattwespe), Hoplocampa minuta (Pflaumensägewespe), Monomorium pharaonis (Pharaoameise), Solenopsis geminata (Feuerameise), Atta sexdens (Blattschneiderameise) ;

aus der Ordnung der Wanzen (Heteroptera), beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze) ;

aus der Ordnung der Pflanzensauger (Homoptera), beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Zchwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysaphis radicola (Mehlige Apfelfalterlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon onobrychis (Grüne Erbsenlaus), Macrosiphon rosae (Große Rosenblattlaus), Megoura viciae (Wickenlaus), Schizoneura lanuginosa (Birnenblattlaus), Pemphigus bursarius (Salatwurzellaus), Dreyfusia nord-mannianae (Tannentrieblaus), Dreyfusia piceae (Weißtannenstammlaus), Adelges laricis (Rote Fichtengallenlaus), Viteus vitifolii (Reblaus) ;

aus der Ordnung der Termiten (Isoptera), beispielsweise Reticulitermes lucifugus, Calotermes flavicollis, Leucotermes flavipes, Termes natalensis, und

aus der Ordnung der Geradflügler (Orthoptera), beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgsheuschrecke), Melanoplus

femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Spinnentiere (Arachnoidea) gehören Milben und Zecken (Acarina), beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z.B. Meloidogyne incognita, Meloidogyne hapla, Meloidogyne javanica, Zysten bildende Nematoden, z.B. Heterodera rostochiensis, Heterodera schachtii, Heterodera avenae, Heterodera glycines, Heterodera triflolii, Stock- und Blattäichen, z.B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die Wirkstoffe können als solche, in Form ihrer Formulierungen oder den daraus bereiteten Anwendungsmöglichkeiten, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methyl-pyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatierter Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylenoctylphenoläther, äthoxyliertes Isooctylphenol, Octylphenol, Nonylphenon, Alkylphenolpolyglykoläther, Tributylphenylpolyglykoläther, Alkylarylpolyätheralkohole, Isotridecylalkohol, Fettalkoholäthylenoxid-Kondensate, äthoxyliertes Rizinusöl, polyoxyäthylenalkyläther, äthoxyliertes Polyoxypropylen, Laurylalkoholpolyglykolätheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind :

I. 3 Gewichtsteile O-Äthyl-O-[(2,2-dichlor-3,3-dimethylcyclopropyl)-methyl]-O-(4-nitrophenyl)-phosphat werden mit 97 Gewichtsteilen feinteiligem Kaolin innig vermischt. Man erhält auf diese Weise ein Stäubemittel, das 3 Gew.% des Wirkstoffs enthält.

II. 30 Gewichtsteile S-i-Butyl-O-[(2,2-dichlor-3,3-dimethyl-cyclopropyl)-methyl]-O-(2-chlor-4-bromphenyl)-thiophosphat werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 20 Gewichtsteile O-[(2,2-Dichlor-1-methyl-cyclopropyl)-methyl]-O-(4-methylthio-phenyl)-isopropylphosphoramidat werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoäthanolamid, 5 Gewichtsteilen Calciumsalz der Dodecylbenzolsulfonsäure und 5 Gewichtsteilen des Anlagerungsproduktes von 40 Mol Äthylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.% des Wirkstoffs enthält.

IV. 20 Gewichtsteile O-[(2,2-Dichlor-cyclopropyl)-methyl]-O-(3-methyl-4-nitro-phenyl)-thiophosphat werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10 Gewichtsteilen des Anlagerungsproduktes von 40 Mol Äthylenoxid an 1 Mol Ricinusöl besteht. Durch Eingießen und feines Verteilen der Lösung in 100 000 Gewichtsteilen Wasser erhält man eine wäßrige

Dispersion, die 0,02 Gewichtsprozent des Wirkstoffs enthält.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffe werden in Form dieser Formulierungen oder in Form daraus herstellbarer anwendungsfertiger Zubereitungen angewendet.

Die Wirkstoffkonzentrationen in solchen anwendungsfertigen Zubereitungen können in größeren Bereichen variiert werden. Im allgemeinen liegen sie zwischen 0,000 1 und 10 %, vorzugsweise zwischen 0,01 und 1 %.

Die Wirkstoffe können auch mit gutem Erfolg im Ultra-Low-Volume-Verfahren (ULV) verwendet werden ; dabei ist es möglich, Formulierungen mit über 95 Gew.% Wirkstoff oder sogar den Wirkstoff ohne Zusätze auszubringen.

Zu den Wirkstoffen können Öle verschiedenen Typs, Herbizide, Fungizide, andere Insektizide, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Beispielsweise können folgende Mittel zugemischt werden : 1,2-Dibrom-3-chlorpropan, 1,3-Dichlorpropen, 1,3-Dichlorpropen + 1,2-Dichlorpropan, 1,2-Dibrom-äthan, 2-sec.-Butyl-phenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthal-N-methylcarbamat, 2,3-Dihydro-2,2-dimethyl-benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)oxy]-1-thiooxamidat, N-2(Methyl-4-chlor-phenyl)-N',N'-dimethylformamidin, Tetrachlorthiophen 1-(2,6-Difluor-benzoyl)-3-(4-chlor-phenyl)-harnstoff, O,O-Dimethyl-O-(p-nitrophenyl)-phosphorthioat, O,O-Diäthyl-O-(p-nitrophenyl)-phosphorthioat, O-Äthyl-O-(p-nitrophenyl)-phenyl-phosphonothioat, O,O-Dimethyl-O-(3-methyl-4-nitrophenyl)-phosphorthioat, O,O-Diäthyl-O-(2,4-dichlorphenyl)-phosphorthioat, O-Äthyl-O-(2,4-dichlorphenyl)-phenyl-phosphonothioat, O,O-Dimethyl-O-(2,4,5-trichlorphenyl)-phosphorthioat, O-Äthyl-O-(2,4,5-trichlorphenyl-äthyl-phosphonothioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Äthyl-O-(3-methyl-4-methylthiophenyl)-isopropyl-phosphoramidat, O,O-Diäthyl-O-[p-(methylsulfinyl)phenyl]-phosphorthioat, O-Äthyl-S-phenyläthyl-phosphonodithioat, O,O-Diäthyl-[2-chlor-1-(2,4-dichlorphenyl)-vinyl]-phosphat, O,O-Dimethyl-[-2-chlor-1-(2,4,5-trichlorphenyl])-vinyl-phosphat, O,O-Dimethyl-S-(1'-phenyl)-äthylacetatphosphordithioat, Bis-(dimethylamino)-fluorphosphinoxid, Octamethyl-pyrophosphoramid, O,O,O,O-Tetraäthyldithio-pyrophosphat, S-Chlor-methyl-O,O-diäthyl-phosphordithioat, O-Äthyl-S,S-dipropylphosphordithioat, O,O-Dimethyl-O-2,2-dichlorvinyl-phosphat, O,O-Dimethyl-1,2-dibrom-2,2-dichloräthylphosphat, O,O-Dimethyl-2,2,2-trichlor-1-hydroxy-äthylphosphonat, O,O-Dimethyl-S-[1,2-biscarbäthoxy-äthyl-(1)]-phosphordithioat, O,O-Dimethyl-O-(1-methyl-2-carbmethoxy-vinyl)-phosphat, O,O-Dimethyl-S-(N-methyl-carbamoyl-methyl)-phosphordithioat, O,O-Dimethyl-S-(N-methyl-carbamoyl-methyl)-phosphorthioat, O,O-Dimethyl-S-(N-methoxyäthylcarbamoyl-methyl)-phosphordithioat, O,O-Dimethyl-S-(N-formyl-N-methyl-carbamoylmethyl-phosphordithioat, O,O-Dimethyl-O-[1-methyl-2-(methyl-carbamoyl)-vinyl]-phosphat, O,O-Dimethyl-O-[(1-methyl-2-dimethylcarbamoyl)-vinyl]-phosphat, O,O-Dimethyl-O-[(1-methyl-2-chlor-2-diäthylcarbamoyl)-vinyl]-phosphat, O,O-Diäthyl-S-(äthylthio-methyl)phosphordithioat, O,O-Diäthyl-S-[(p-chlorphenylthio)-methyl)-phosphordithioat, O,O-Dimethyl-S-(2-äthylthioäthyl)-phosphorthioat, O,O-Dimethyl-S-(2-äthylthioäthyl)-phosphordithioat, O,O-Dimethyl-S-(2-äthylsulfinyl-äthyl)-phosphorthioat, O,O-Diäthyl-S-(2-äthylthio-äthyl)-phosphordithioat, O,O-Diäthyl-S-(2-äthylsulfinyl-äthyl)-phosphorthioat, O,O-Diäthyl-thiophosphoryliminophenyl-acetonitril, O,O-Diäthyl-S-(2-chlor-1-phthalimido-äthyl)-phosphordithioat, O,O-Diäthyl-S-[6-chlor-benzoxazolon-(2)-yl(3)]-methyldithiophosphat, O,O-Dimethyl-S-[2-methoxy-1,3,4-thiadiazol-5-[4H]-onyl-(4)-methyl]-phosphordithioat, O,O-Diäthyl-O-[3,5,6-trichlor-pyridyl-(2)-phosphorthioat, O,O-Diäthyl-O-(2-pyrazinyl)-phosphorthioat, O,O-Diäthyl-O-[2-isopropyl-4-methyl-pyrimidinyl(6)]-phosphorthioat, O,O-Diäthyl-O-[2(diäthylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diäthyl-(1-phenyl-1,2,4-triazol-3-yl)-thionophosphat, O,S-Dimethyl-phosphor-amido-thioat, O,S-Dimethyl-N-acetylphosphoramidothioat, γ-Hexachlorcyclohexan, 1,1-Di-(p-methoxyphenyl)-2,2,2-trichloräthan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis, trans-chrysanthemat, 5-Benzyl-furyl-(3)-methyl-DL-cis, trans-chrysanthemat, 3-Phenoxybenzyl (±)-cis, trans-2,2-dimethyl-3-(2,2-dichlorvinyl)-cyclopropancarboxylat, α-Cyano-3-phenoxybenzyl(±)-cis, trans-2,2-dimethyl-3-(2,2-dichlorvinyl)-cyclopropancarboxylat, (s)-α-Cyano-3-phenoxybenzyl-cis(1R,3R)-2,2-dimethyl-3-(2,2-dibromvinyl)-cyclopropancarboxylat, 3,4,5,6-Tetrahydrophthalimidoäthyl-DL-cis, trans-chrysanthemat, 2-Methyl-5-(2-propinyl)-3-furylmethyl-chrysanthemat, α-Cyano-3-phenoxybenzyl-α-isopropyl-4-chlorphenylacetat.

Die folgenden Beispiele belegen die biologische Wirkung der neuen Verbindungen. Vergleichsmittel sind die bekannten Wirkstoffe

(I) 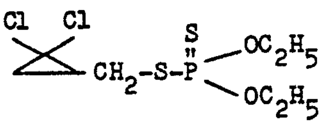 (DE-OS 26 34 587)

(II) 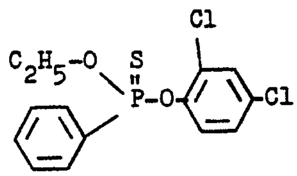 (DE-AS 10 50 768),

(III) 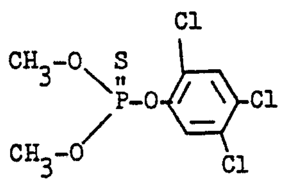 (US-PS 28 11 480)

und

(IV) 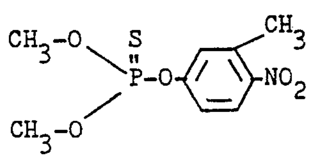 (US-PS 31 32 780).

Die Numerierung der übrigen Wirkstoffe entspricht der in den Beispielen und der tabellarischen Auflistung.

Beispiel A

Kontakwirkung auf Schaben (Blatta orientalis)

Der Boden eines 1 1-Einmachglases wird mit der acetonischen Lösung des Wirkstoffs behandelt. Nach dem Verdunsten des Lösungsmittels setzt man je Glas 5 adulte Schaben.

Die Mortalitätsrate wird nach 48 Stunden bestimmt.

| Wirkstoff Nr. | Wirkstoffmenge pro Glas [mg] | Mortalitätsrate [%] |
|---|---|---|
| 1 | 0,25 | 80 |
| 7 | 0,2 | 100 |
| 10 | 0,04 | 100 |
| 21 | 0,1 | 100 |
| 23 | 0,1 | 100 |
| 24 | 0,1 | 100 |
| 25 | 0,2 | 100 |
| 27 | 0,02 | 80 |
| 31 | 0,2 | 100 |

(Fortsetzung)

| Wirkstoff Nr. | Wirkstoffmenge pro Glas [mg] | Mortalitätsrate [%] |
|---|---|---|
| I | 5,0 | 100 |
| II | 1,0 | unwirksam |
| III | 0,5 | 100 |
| IV | 0,25 | unwirksam |

Beispiel B

Kontaktwirkung auf Stubenfliegen (Musca domestica) ; Dauerkontakt

Beide Teile einer Petrischale von 10 cm Durchmesser werden mit insgesamt 2 ml der acetonischen Wirkstofflösung ausgekleidet. Nach dem Verdunsten des Lösungsmittels (ca. 30 Minuten) bringt man je 10 Fliegen in die Schalen. Die Mortalität wird nach 4 Stunden festgestellt.

| Wirkstoff Nr. | Wirkstoffmenge pro Petrischale [mg] | Mortalitätsrate [%] |
|---|---|---|
| 4 | 0,02 | 100 |
| 7 | 0,2 | 100 |
| 10 | 0,2 | 100 |
| 17 | 0,2 | 80 |
| 21 | 0,2 | 100 |
| 23 | 0,02 | 100 |
| 24 | 0,02 | 100 |
| 25 | 0,02 | 80 |
| 26 | 0,2 | 100 |
| 27 | 0,02 | 100 |
| 28 | 0,2 | 80 |
| 30 | 0,2 | 100 |
| 32 | 0,2 | 100 |
| 33 | 0,2 | 80 |
| I | 2,0 | 100 |
| II | 0,2 | unwirksam |

Beispiel C

Kontaktwirkung auf Stubenfliegen (Musca domestica) ; Applikationstest

4 Tage alte Imagines erhalten in leichter $CO_2$-Narkose 1 µl der acetonischen Lösung des Wirkstoffes auf das ventrale Abdomen appliziert. Hierzu wird eine Mikrometerspritze verwendet.

Je 20 Versuchstiere mit gleicher Behandlung bringt man dann in einen Folienbeutel von ca. 500 ml Inhalt. Nach 4 Stunden zählt man die Tiere in Rückenlage aus und ermittelt graphisch die LD 50.

| Wirkstoff Nr. | LD 50 [µg/Fliege] |
|---|---|
| 4 | 0,055 |
| 23 | 0,073 |
| 24 | 0,051 |
| 27 | 0,057 |
| III | 0,13 |

Beispiel D

Kontaktwirkung auf Blattläuse (Aphis fabae) ; Spritzversuch

Getopfte Bohnenpflanzen (Vicia faba) mit starken Blattlauskolonien werden in einer Spritzkammer mit den wäßrigen Wirkstoffaufbereitungen tropfnaß gespritzt.

Die Auswertung erfolgt nach 48 Stunden.

| Wirkstoff Nr. | Konzentration der Wirkstoffaufbereitung [Gew.%] | Mortalitätsrate [%] |
|---|---|---|
| 1 | 0,02 | 100 |
| 3 | 0,005 | 100 |
| 4 | 0,01 | ca. 90 |
| 7 | 0,01 | ca. 90 |
| 10 | 0,01 | 100 |
| 23 | 0,005 | ca. 90 |
| 24 | 0,002 | 100 |
| 25 | 0,005 | 100 |
| 26 | 0,02 | 100 |
| 27 | 0,005 | ca. 90 |
| 28 | 0,02 | 100 |
| 29 | 0,02 | 100 |
| 30 | 0,01 | 100 |
| 32 | 0,008 | 100 |
| 33 | 0,01 | 100 |
| I | 0,1 | $<$ 50 |
| II | 0,02 | $<$ 80 |

Beispiel E

Fraß- und Kontaktwirkung auf Raupen der Kohlschabe (Plutella macultipennis)

Blätter von jungen Kohlpflanzen werden 3 Sekunden lang in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

| Wirkstoff Nr. | Konzentration der Wirkstoffemulsion [Gew.%] | Mortalitätsrate [%] |
|---|---|---|
| 1 | 0,02 | 100 |
| 7 | 0,01 | 80 |
| 10 | 0,01 | 100 |
| 23 | 0,001 | 80 |
| 24 | 0,002 | 80 |
| 25 | 0,002 | 80 |
| 27 | 0,001 | 100 |
| 31 | 0,01 | 80 |
| I | 0,1 | 50 |
| III | 0,02 | 50 |

Beispiel F

Kontaktwirkung auf Zecken (Ornithodorus moubata)

Geprüft wird mit Zecken im 3. Larvenstadium. Dazu taucht man die Tiere, die sich in einem Papierbeutel befinden, für 3 Sekunden in die Prüfemulsion. Die Beutel werden frei aufgehängt. Nach 48 Stunden wird die Wirkung auf die Zecken beurteilt.

| Wirkstoff Nr. | Wirkstoffkonzentration als Emulsion [ppm] | Mortalitätsrate [%] |
|---|---|---|
| 1 | 10,0 | 100 |
| 4 | 5,0 | 100 |
| 7 | 10,0 | 100 |
| 10 | 10,0 | 100 |
| 14 | 10,0 | 100 |
| 17 | 2,5 | 100 |
| 18 | 2,5 | 100 |
| 19 | 10,0 | 100 |
| 20 | 2,5 | 100 |
| 21 | 1,0 | 100 |
| 23 | 1,0 | 100 |
| 24 | 1,0 | 100 |
| 25 | 10,0 | 100 |
| 27 | 1,0 | 100 |
| 30 | 10,0 | 100 |
| 31 | 5,0 | 100 |
| 32 | 10,0 | 100 |

Beispiel G

Wirkung auf Wurzelgallennematoden (Meloidogyne incognita) an Gurken

200 g Gartenerde, die stark mit Meloidogyne incognita infiziert ist, werden mit 30 ml der wässrigen Wirkstoffaufbereitung innig vermischt. Die Erde wird darauf in Plastiktöpfe gefüllt und mit zwei Gurkensamen belegt.

Die Versuchstemperatur soll + 22 °C nicht unterschreiten.

Nach 6 bis 8 Wochen boniert man die Wurzeln auf Gallenbildung.

| Wirkstoff Nr. | Konzentration der Wirkstoffaufbereitung [Gew.%] | | |
|---|---|---|---|
| 1 | 0,05 | keine | Gallenbildung |
| 2 | 0,1 | " | " |
| 15 | 0,1 | " | " |
| 21 | 0,1 | " | " |
| 25 | 0,1 | " | " |
| 32 | 0,1 | " | " |
| II | 0,1 | vereinzelte Gallen | |

**Ansprüche** (für die Vertragsstaaten : BE, CH, LI, DE, FR, GB, IT, NL, SE)

1. 2,2-Dichlorcyclopropyl-methyl-phosphorsäurederivate der Formel I

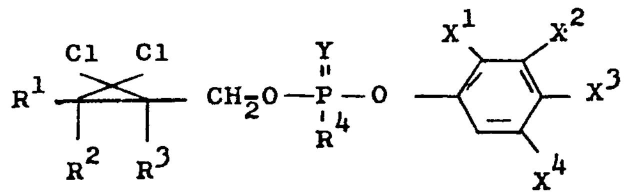

(I),

in der

$R^1$, $R^2$ und $R^3$ gleich oder verschieden sind und Wasserstoff oder Methyl,

$R^4$ eine unverzweigte oder verzweigte Alkoxygruppe mit bis zu 4 Kohlenstoffatomen, einen unverzweigten oder verzweigten Alkylthiorest mit bis zu 4 Kohlenstoffatomen, die Aminogruppe oder einen Alkylamino- oder Dialkylaminorest mit jeweils bis zu 5 Kohlenstoffatomen in einer Alkylgruppe, die unverzweigt oder verzweigt sein kann, und

Y Sauerstoff oder Schwefel bedeuten und

$X^1$, $X^2$, $X^3$ und $X^4$ gleich oder verschieden sind und jeweils für Wasserstoff, Halogen, Nitro, Cyano, Methyl oder Methylthio stehen.

2. O-Methyl-O-[(2,2-dichlorpropyl)-methyl]-O-(4-methyl-thio-phenyl)-phosphat.

3. O-Methyl-O-[(2,2-dichlorcyclopropyl)-methyl]-O-(4-nitrophenyl)-phosphat.

4. O-Methyl-O-[(2,2-dichlorcyclopropyl)-methyl]-O-(2-nitrophenyl)-thiophosphat.

5. Verfahren zur Herstellung von 2,2-Dichlorcyclopropyl-methyl-phosphorsäurederivaten der Formel I gemäß Anspruch 1, dadurch gekennzeichnet, daß man Phenole der Formel II

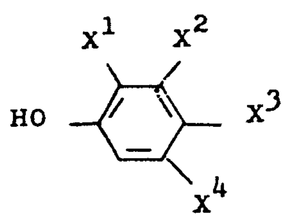

(II),

in der

$X^1$, $X^2$, $X^3$ und $X^4$ die oben genannten Bedeutungen haben, gegebenenfalls in Gegenwart eines Säureacceptors oder Alkalimetall-, Erdalkalimetall- oder gegebenenfalls substituierte Ammoniumsalze dieser Phenole mit (Thio)Phosphorsäure(di)ester(amid)halogeniden der Formel III

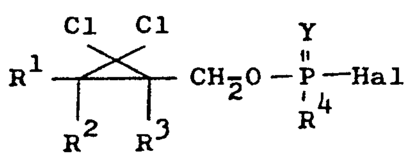

(III),

in der

$R^1$, $R^2$, $R^3$, $R^4$ und Y die oben angegebenen Bedeutungen haben und Hal für Halogen steht, gegebenenfalls in Gegenwart eines inerten Lösungs- oder Verdünnungs-mittels bei Temperaturen zwischen 0 und 120 °C umsetzt.

6. Schädlingsbekämpfungsmittel, enthaltend ein 2,2-Dichlorcyclopropylmethyl-phosphorsäurederivat der Formel I gemäß Anspruch 1.

7. Verfahren zur Bekämpfung von Schädlingen, dadurch gekennzeichnet, daß man 2,2-Dichlorcyclopropyl-methyl-phosphorsäurederivate der Formel I gemäß Anspruch 1 auf die Schädlinge bzw. deren Lebensraum einwirken läßt.

**Ansprüche** (für den Vertragsstaat AT)

1. Schädlingsbekämpfungsmittel, enthaltend ein 2,2-Dichlorcyclopropyl-methyl-phosphorsäurederivat der Formel I

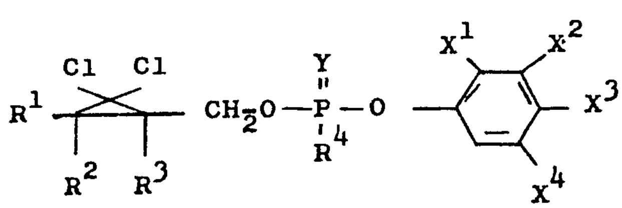

(I),

in der

$R^1$, $R^2$ und $R^3$ gleich oder verschieden sind und Wasserstoff oder Methyl,

$R^4$ eine unverzweigte oder verzweigte Alkoxygruppe mit bis zu 4 Kohlenstoffatomen, einen unverzweigten oder verzweigten Alkylthiorest mit bis zu 4 Kohlenstoffatomen, die Aminogruppe oder einen Alkylamino- oder Dialkylaminorest mit jeweils bis zu 5 Kohlenstoffatomen in einer Alkylgruppe, die unverzweigt oder verzweigt sein kann, und

Y Sauerstoff oder Schwefel bedeuten und

$X^1$, $X^2$, $X^3$ und $X^4$ gleich oder verschieden sind und jeweils für Wasserstoff, Halogen, Nitro, Cyano, Methyl oder Methylthio stehen, als Wirkstoff.

2. Schädlingsbekämpfungsmittel, enthaltend O-Methyl-O-[(2,2-dichlorpropyl)-methyl]-O-(4-methylthiophenyl-phosphat als Wirkstoff.

3. Schädlingsbekämpfungsmittel, enthaltend O-Methyl-O-[(2,2-dichlorcyclopropyl)-methyl]-O-(4-nitro-phenyl)-phosphat als Wirkstoff.

4. Schädlingsbekämpfungsmittel, enthaltend O-Methyl-O-[(2,2-dichlorcyclopropyl)-methyl]-O-(2-nitrophenyl)-thiophosphat als Wirkstoff.

5. Verfahren zur Herstellung von 2,2-Dichlorcyclopropyl-methyl-phosphorsäurederivaten der Formel I gemäß Anspruch 1, dadurch gekennzeichnet, daß man Phenole der Formel II

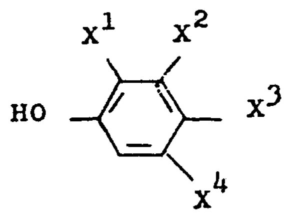

(II),

in der

$X^1$, $X^2$, $X^3$ und $X^4$ die oben genannten Bedeutungen haben, gegebenenfalls in Gegenwart eines Säureacceptors oder Alkalimetall-, Erdalkalimetall- oder gegebenenfalls substituierte Ammoniumsalze dieser Phenole mit (Thio)Phosphorsäure(di)ester(amid)halogeniden der Formel III

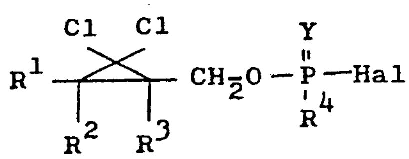

(III),

in der

$R^1$, $R^2$, $R^3$, $R^4$ und Y die oben angegebenen Bedeutungen haben und Hal für Halogen steht, gegebenenfalls in Gegenwart eines inerten Lösungs- oder Verdünnungs-mittels bei Temperaturen zwischen 0 und 120 °C umsetzt.

**Claims** (for the contracting States : BE, CH, LI, DE, FR, GB, IT, NL, SE)

1. 2,2-Dichlorocyclopropyl-methyl-phosphoric acid derivatives of the formula I

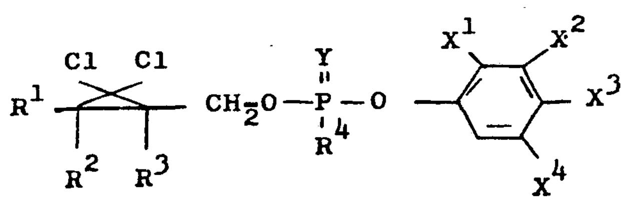

(I),

where

$R^1$, $R^2$ and $R^3$ are identical or different and are hydrogen or methyl,

$R^4$ is unbranched or branched alkoxy of up to 4 carbon atoms, unbranched or branched alkylthio of up to 4 carbon atoms, amino, or alkylamino or dialkylamino, where each alkyl is of up to 5 carbon atoms and is linear or branched,

Y is oxygen or sulfur and

$X_1$, $X_2$, $X_3$ and $X_4$ are identical or different and each is hydrogen, halogen, nitro, cyano, methyl or methylthio.

2. O-Methyl-O-[(2,2-dichloropropyl)-methyl]-O-(4-methylthiophenyl)-phosphate.

3. O-Methyl-O-[(2,2-dichlorocyclopropyl)-methyl]-O-(4-nitrophenyl-)phosphate.

4. O-Methyl-O-[(2,2-dichlorocyclopropyl)-methyl]-O-(2-nitrophenyl)-thiophosphate.

5. A process for the manufacture of 2,2-dichlorocyclopropyl-methyl-phosphoric acid derivatives of the formula I as claimed in claim 1, characterized in that a phenol of the formula II

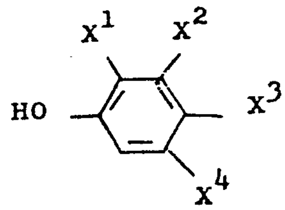

(II),

where

$X^1$, $X^2$, $X^3$ and $X^4$ have the above meanings, or an alkali metal salt, alkaline earth metal salt or unsubstituted or substituted ammonium salt of such a phenol, is reacted, at from 0° to 120 °C, in the presence or absence of an inert solvent or diluent and in the presence or absence of an acid acceptor, with a (thio)phosphoric acid diester halide or ester-amide halide of the formula

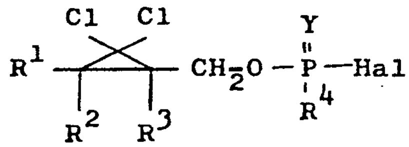

(III),

where

$R^1$, $R^2$, $R^3$, $R^4$ and Y have the above meanings and Hal denotes halogen.

6. A pesticide containing a 2,2-dichlorocyclopropyl-methyl-phosphoric acid derivative of the formula I as claimed in claim 1.

7. A process for combating pests, characterized in that 2,2-dichlorocyclopropyl-methyl-phosphoric acid derivatives of the formula I as claimed in claim 1 are allowed to act on the pests or their habitat.

**Claims** (for the contracting State : AT)

1. A pesticide containing, as active ingredient, a 2,2-dichlorocyclopropyl-methyl-phosphoric acid derivative of the formula I

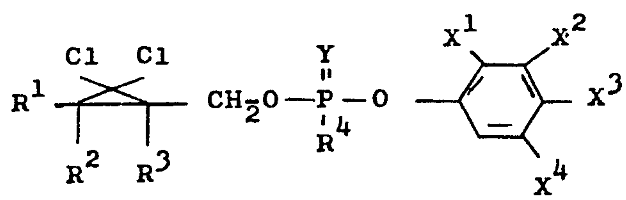

(I),

where

$R^1$, $R^2$ and $R^3$ are identical or different and are hydrogen or methyl,

$R^4$ is unbranched or branched alkoxy of up to 4 carbon atoms, unbranched or branched alkylthio of up to 4 carbon atoms, amino, or alkylamino or dialkylamino, where each alkyl is of up to 5 carbon atoms and is linear or branched,

Y is oxygen or sulfur and •

$X_1$, $X_2$, $X_3$ and $X_4$ are identical or different and each is hydrogen, halogen, nitro, cyano, methyl or methylthio.

2. A pesticide containing O-methyl-O-[(2,2-dichloropropyl)-methyl]-O-(4-methylthiophenyl)-phosphate as active ingredient.

3. A pesticide containing O-methyl-O-[(2,2-dichlorocyclopropyl)-methyl]-O-(4-nitrophenyl)-phosphate as active ingredient.

4. A pesticide containing O-methyl-O-[(2,2-dichlorocyclopropyl)-methyl]-O-(2-nitrophenyl)-thiophosphate as active ingredient.

5. A process for the manufacture of 2,2-dichlorocyclopropyl-methyl-phosphoric acid derivatives of the formula I as claimed in claim 1, characterized in that a phenol of the formula II

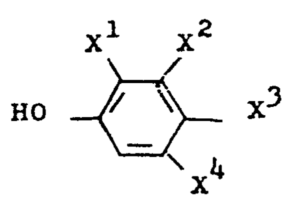

(II),

where

$X^1$, $X^2$, $X^3$ and $X^4$ have the above meanings, or an alkali metal salt, alkaline earth metal salt or unsubstituted or substituted ammonium salt of such a phenol, is reacted, at from 0° to 120 °C, in the presence or absence of an inert solvent or diluent and in the presence or absence of an acid acceptor, with a (thio)phosphoric acid diester halide or ester-amide halide of the formula

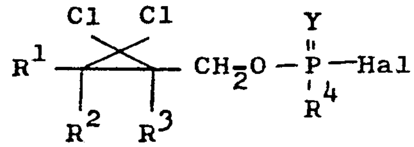

(III),

where

$R^1$, $R^2$, $R^3$, $R^4$ and Y have the above meanings and Hal denotes halogen.

**Revendications** (pour les Etats contractants : BE, CH, LI, DE, FR, GB, IT, NL, SE)

1. Dérivés d'acide 2,2-dichlorocyclopropyl-méthyl-phosphorique de formule I

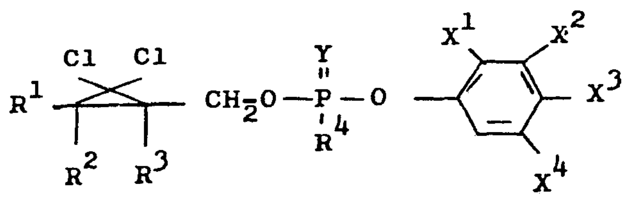

(I),

dans laquelle

$R^1$, $R^2$ et $R^3$ sont identiques ou différents et représentent hydrogène ou méthyle,

$R^4$ représente un groupe alcoxy, ramifié ou non, ayant jusqu'à 4 atomes de carbone, un reste alkylthio, ramifié ou non, ayant jusqu'à 4 atomes de carbone, le groupe amino ou un reste alkylamino ou dialkylamino ayant jusqu'à 5 atomes de carbone dans un groupe alkyle, qui peut être ramifié ou non, et

Y représente oxygène ou soufre et

$X^1$, $X^2$, $X^3$ et $X^4$ sont identiques ou différents et représentent chacun hydrogène, halogène, nitro, cyano, méthyle ou méthylthio.

2. O-méthyl-O-[(2,2-dichloropropyl)-méthyl]-O-(4-méthyl-thio-phényl)-phosphate.

3. O-méthyl-O-[(2,2-dichlorocyclopropyl)-méthyl]-O-(4-nitro-phényl)-phosphate.

4. Pesticide contenant, comme principe actif, du O-méthyl-O-[(2,2-dichlorocyclopropyl)-méthyl]-O-(2-nitrophényl)-thiophosphate.

5. Procédé de préparation de dérivés d'acide 2,2-dichlorocyclopropyl-méthyl-phosphorique de formule I selon la revendication 1, caractérisé par le fait que l'on fait réagir, éventuellement en présence d'un solvant ou diluant inerte, à des températures comprises entre 0 et 120 °C, des phénols de formule II

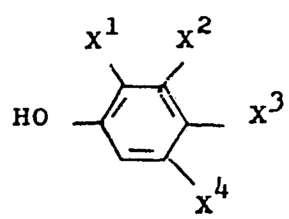

(II),

dans laquelle

$X^1$, $X^2$, $X^3$ et $X^4$ ont les significations indiquées ci-dessus, éventuellement en présence d'un accepteur d'acide ou de sels de ces phénols et de métaux alcalins ou alcalino-terreux ou d'ammonium éventuellement substitués, avec des halogénures de (di)ester(amide) d'acide (thio)phosphorique de formule III

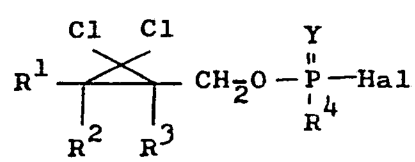

(III),

dans laquelle

$R^1$, $R^2$, $R^3$, $R^4$ et Y ont les significations données ci-dessus et Hal représente halogène.

6. Pesticide contenant un dérivé d'acide 2,2-dichlorocyclopropyl-méthyl-phosphorique de formule I selon la revendication 1.

7. Procédé de lutte contre les parasites, caractérisé par le fait qu'on fait agir sur les parasites ou leur biotope, un dérivé d'acide 2,2-dichlorocyclopropyl-méthyl-phosphorique de formule I selon la revendication 1.

**Revendications** (pour l'Etat contractant : AT)

1. Pesticide contenant comme principe actif un dérivé d'acide 2,2-dichlorocyclopropyl-méthyl-phosphorique de formule I

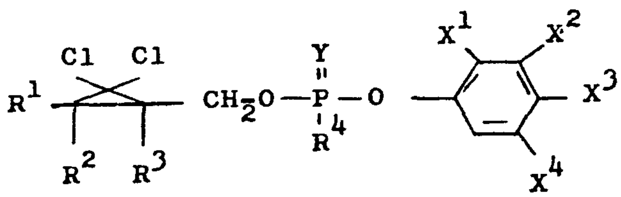

(I),

dans laquelle

$R^1$, $R^2$ et $R^3$ sont identiques ou différents et représentent hydrogène ou méthyle,

$R^4$ représente un groupe alcoxy, ramifié ou non, ayant jusqu'à 4 atomes de carbone, un reste alkylthio, ramifié ou non, ayant jusqu'à 4 atomes de carbone, le groupe amino ou un reste alkylamino ou dialkylamino ayant jusqu'à 5 atomes de carbone dans un groupe alkyle, qui peut être ramifié ou non, et

Y représente oxygène ou soufre et

$X^1$, $X^2$, $X^3$ et $X^4$ sont identiques ou différents et représentent chacun hydrogène, halogène, nitro, cyano, méthyle ou méthylthio.

2. Pesticide contenant, comme principe actif, du O-méthyl-O-[(2,2-dichloropropyl)-méthyl]-O-(4-méthyl-thio-phényl-phosphate.

3. Pesticide contenant, comme principe actif, du O-méthyl-O-[(2,2-dichlorocyclopropyl)-méthyl]-O-(4-nitro-phényl)-phosphate.

4. Pesticide contenant, comme principe actif, du O-méthyl-O-[(2,2-dichlorocyclopropyl)-méthyl]-O-(2-nitrophényl)-thiophosphate.

5. Procédé de préparation de dérivés d'acide 2,2-dichlorocyclopropyl-méthyl-phosphorique de formule I selon la revendication 1, caractérisé par le fait que l'on fait réagir, éventuellement en présence d'un solvant ou diluant inerte, à des températures comprises entre 0 et 120 °C, des phénols de formule II

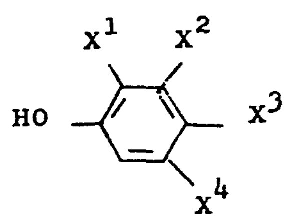

(II),

dans laquelle

$X^1$, $X^2$, $X^3$ et $X^4$ ont les significations indiquées ci-dessus, éventuellement en présence d'un accepteur d'acide ou des sels de ces phénols et de métaux alcalins ou alcalino-terreux ou d'ammonium éventuellement substitués, avec des halogénures de (di)ester(amide) d'acide (thio)phosphorique de formule III

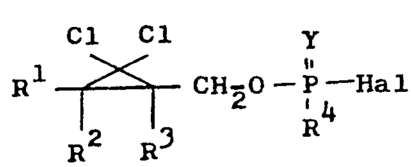

(III),

dans laquelle

$R^1$, $R^2$, $R^3$, $R^4$ et Y ont les significations données ci-dessus et Hal représente halogène.